# EUROPEAN PATENT APPLICATION

(11) **EP 4 599 930 A1**
(43) Date of publication of application: **13.08.2025**
(21) Application number: 23884692.7
(22) Date of filing: 25.10.2023
(51) Int. Cl.: B01J 27/051, B01J 23/883, B01J 37/00, C10G 45/08

(54) **COMPOSITE OXIDE AND SILICON CAPTURE AGENT, PREPARATION METHODS THEREFOR AND USE THEREOF, AND METHOD FOR TREATING SILICON-CONTAINING OIL PRODUCT**

(30) Priority: 31.10.2022 CN 202211345464
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: LIU, Li, Dalian, Liaoning 116045 (CN); YANG, Chengmin, Dalian, Liaoning 116045 (CN); CHEN, Xiaozhen, Dalian, Liaoning 116045 (CN); ZHENG, Bumei, Dalian, Liaoning 116045 (CN); YIN, Xiaoying, Dalian, Liaoning 116045 (CN)
(74) Representative: Hoffmann Eitle
(86) International application number: PCT/CN2023/126515
(87) International publication number: WO 2024/093760

(57) **Abstract**

The present invention relates to the technical field of hydrogenation of oil products, and discloses a composite oxide and a silicon capture agent, preparation methods therefor and the use thereof, and a method for treating a silicon-containing oil product. The composite oxide comprises aluminum oxide and pseudo-boehmite, wherein the pseudo-boehmite is loaded on the outer surface of the aluminum oxide, and the surface hydroxyl content of the composite oxide is 1,000-2,500 µmol/g. The silicon capture agent comprises aluminum oxide, pseudo-boehmite and an active component, wherein the active component comprises a group-VIB metal sulfide and a group-VIII metal sulfide; and the surface hydroxyl content of the silicon capture agent is 1,000-2,000 µmol/g. The composite oxide and the silicon capture agent provided in the present invention have an improved surface hydroxyl content and an improved silicon capacity.

## Description

### CROSS-REFERENCE TO RELATED APPLICATIONS

The application claims the benefit of the Chinese Patent Application No. "202211345464.7", filed on October 31, 2022, the content of which is specifically and entirely incorporated herein by reference.

### TECHNICAL FIELD

The present invention relates to the technical field of hydrogenation of oil products, in particular to a composite oxide and a silicon capture agent, preparation methods therefor and use thereof, and a method for treating a silicon-containing oil product.

### BACKGROUND ART

There are still a large number of delayed coking units used for processing the heavy and inferior oils, and the defoaming agents will be used during the processing procedure, which causes a certain amount of silicon to be contained in the coking dry gas, coking naphtha, coking diesel and other products, however, the silicon poisons the catalyst that is used for the subsequent treatment of the coking products, resulting in permanent deactivation of the catalyst. Therefore, the hydrotreatment process of the coking dry gas, coking naphtha, and coking diesel requires a filling of a silicon capture catalyst.

CN201410809089.6 discloses a coking gasoline desilication catalyst and preparation method thereof. The catalyst contains an Al₂O₃-TiO₂-B₂O₃ composite oxide as a carrier and Ni-Mo-W-Ce as an active component; the used Al₂O₃-TiO₂-B₂O₃ carrier comprises the following components in percentage by weight: 10-20% of TiO₂, 3-10% of B₂O₃, and the rest is Al₂O₃; in terms of the weight percentage of the catalyst, the active component comprises the following components in percentage by weight: 1.2-3.9% of NiO, 4.2-9.5% of MoO₃, 5-15% of WO₃, 1.5-2.5% of CeO₂, and the rest is the carrier. The catalyst is roasted in the atmosphere of water vapor, has a special pore diameter and higher pore volume, and is capable of effectively adsorbing and removing silicon impurities and protecting subsequent coking gasoline main hydrofining catalyst.

CN201911020775.4 discloses an oil product silicon capture agent and a preparation method thereof. The oil product silicon capture agent comprises a carrier and hydrogenation active components, wherein the hydrogenation active components are VIII group metal sulfide, VIB group metal oxide, and VIII group metal oxide; based on the total weight of the silicon capture agent, the group VIII metal sulfide accounts for 0.1 wt%-12.2 wt%, the group VIB metal oxide accounts for 0.5 wt%-17.2 wt%, the group VIII metal oxide accounts for 0.1 wt%-9.0 wt%, and the carrier accounts for 61.6%-90.3%. The preparation method comprises the following steps: (1) impregnating a silicon capture agent carrier in an impregnation liquid containing VIII group metals, then carrying out drying treatment, and carrying out sulfurization treatment on the dried material; and (2) impregnating the sulfurized material in the step (1) with an impregnation liquid containing VIB group and group metals, then drying and roasting in an inert atmosphere to obtain the oil product silicon capture agent.

The silicon capture catalysts provided by the aforementioned patent applications have a certain silicon trapping capability, but the silicon capture amount and the silicon trapping capability still need to be further improved.

### SUMMARY OF THE INVENTION

In order to overcome the defect in the prior art that the silicon capture amount and the silicon trapping capability of the silicon capture catalysts still need to be further improved, the present invention provides a composite oxide and a silicon capture agent, preparation methods therefor and the use thereof, and a method for treating a silicon-containing oil product. The composite oxide and the silicon capture agent provided in the present invention have an improved surface hydroxyl content and an improved silicon capacity.

The first aspect of the present invention provides a composite oxide comprises aluminum oxide and pseudo-boehmite, wherein the pseudo-boehmite is loaded on an outer surface of the aluminum oxide, and the surface hydroxyl content of the composite oxide is within a range of 1,000-2,500 µmol/g.

The second aspect of the present invention provides a method for preparing the composite oxide, the method comprises introducing pseudo-boehmite on aluminum oxide and then drying to obtain the composite oxide, the surface hydroxyl content of the composite oxide is within a range of 1,000-2,500 µmol/g.

The third aspect of the present invention provides a silicon capture agent, it is characterized in that the silicon capture agent comprises aluminum oxide, pseudo-boehmite, and an active component comprising a group-VIB metal sulfide and a group-VIII metal sulfide;
The surface hydroxyl content of the silicon capture agent is within a range of 1,000-2,000 µmol/g.

The fourth aspect of the present invention provides a method for preparing the silicon capture agent, the method comprising the following steps:
(1) introducing a group-VIB metal compound and a group-VIII metal compound into an aluminum oxide carrier through an impregnation method, subsequently carrying out a calcination and sulfurization process to obtain a silicon capture agent precursor;
(2) subjecting an aluminum source and a precipitating agent to a precipitation reaction in the presence of the silicon capture agent precursor, then carrying out an aging and drying process.

The fifth aspect of the present invention provides a silicon capture agent produced with the method according to the fourth aspect mentioned above.

The sixth aspect of the present invention provides a use of the composite oxide according to the first aspect mentioned above or the silicon capture agent according to the third aspect or the fifth aspect in the treatment of a silicon-containing oil product.

The seventh aspect of the present invention provides a method for treating a silicon-containing oil product, the method comprises the following steps: contacting the silicon-containing oil product with the composite oxide according to the first aspect mentioned above or the silicon capture agent according to the third aspect or the fifth aspect under the hydrotreatment conditions.

As compared with the prior art, the present invention has the following advantages:
(1) The composite oxide and the silicon capture agent provided by the present invention comprise a pseudo-boehmite component, which provides abundant surface hydroxyl groups for the composite oxide and the silicon capture agent, thereby enhancing their silicon capacity.
(2) In a case of preferably, the group-VIB metal sulfide and the group-VIII metal sulfide in the silicon capture agent of the present invention are loaded on the aluminum oxide carrier, the pseudo-boehmite is loaded on the group-VIB metal sulfide, the group-VIII metal sulfide, and the aluminum oxide carrier, such an arrangement can improve the contact surface of the pseudo-boehmite with the group-VIII metal and the group-VIB metal, enhance the synergic effect of hydrogenation property and silicon capture performance of the silicon capture agent, improve the silicon capability of the silicon capture agent, and reduce the carbon deposition of the silicon capture agent, and prevent the carbon deposition from occupying the silicon capture active sites.
(3) The silicon capture agent of the present invention is in a sulfurized state, without the need for a sulfurization process during the use procedure, and prevents the temperature runaway during the sulfurization process.

### BRIEF DESCRIPTION OF THE DRAWINGS

FIG. 1 illustrates an XRD spectrogram of a silicon capture agent prepared in Example 1;
FIG. 2 illustrates a SEM image of the composite aluminum oxide prepared in Example 8;
FIG. 3 illustrates an XRD spectrogram of the composite aluminum oxide prepared in Example 8.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the present invention, all percentages and percentage contents are measured by mass.

The first aspect of the present invention provides a composite oxide comprises aluminum oxide and pseudo-boehmite, wherein the pseudo-boehmite is loaded on an outer surface of the aluminum oxide, and the surface hydroxyl content of the composite oxide is within a range of 1,000-2,500 µmol/g.

Preferably, the surface hydroxyl content of the composite oxide is within a range of 1,500-2,000 µmol/g, e.g., 1,500 µmol/g, 1,600 µmol/g, 1,700 µmol/g, 1,800 µmol/g, 1,900 µmol/g, and 2,000 µmol/g.

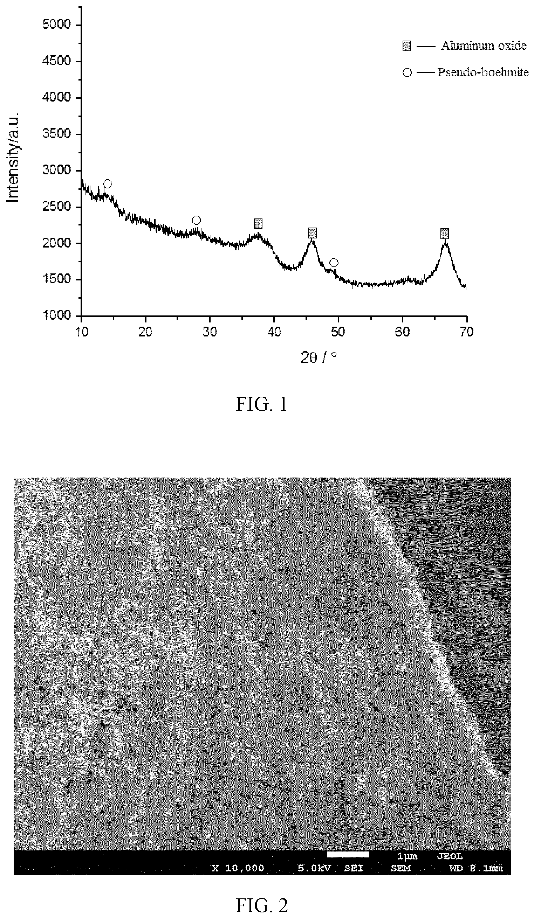

In the composite oxide according to the present invention, the pseudo-boehmite loaded on the outer surface of the aluminum oxide can be observed by SEM. As shown in FIG. 2, the pseudo-boehmite particles are coated on the surface of the aluminum oxide particles.

In the composite oxide provided by the present invention, after the pseudo-boehmite is loaded on an outer surface of the aluminum oxide, the pseudo-boehmite is not subjected to calcination, it prevents a decreased surface hydroxyl content resulting from the aggregation of the pseudo-boehmite particles, thereby improving its silicon capacity.

The composite oxide provided by the present invention has a high surface hydroxyl content and better silicon capacity.

The present invention can analyze the hydroxyl content of samples by means of the FTIR (Fourier Transform Infrared Spectroscopy), the FTIR testing conditions comprise: grinding the sample, pressing the sample to a self-supporting chip having a diameter Φ of 13mm, placing the self-supporting chip in an in-situ pool sample holder, and pre-treating it at a temperature of 250°C. The experiment uses a Nicolet 6700 Fourier Transform Infrared Spectrometer, the number of scans is 32, the resolution is 4cm⁻¹, the measurement at 4,000-650cm⁻¹, and the detector is MCT/A. The results of all infrared experiments are subjected to normalization processing based on the sample mass, and the areas of the hydroxyl peaks corresponding to 3670-3740 cm⁻¹ are calculated.

Preferably, the aluminum element accounts for 47.3-52.8%, more preferably 48.5-52%, based on the total weight of the composite oxide.

In the present invention, the content of Al element in the composite oxide can be measured by using ICP, the apparatus in use is the OPTIMA 7000 DV type atomic emission spectrometer manufactured by PE Corporation. 0.1 g of sample is dissolved in a mixed solution of HCl and HNO₃ having a volume ratio of 3:1, and the mixed solution is then diluted with deionized water to a volume such that the content of the element to be measured in the solution is between 1 ppm and 10 ppm, and the measurement is subsequently carried out.

According to the present invention, preferably, the XRD spectrogram of the composite oxide shows diffraction peaks at 14.5° ± 0.05°, 28.2° ± 0.05°, 49.2° ± 0.05°. In the present invention, the three diffraction peaks correspond to (020), (120), and (200) crystal planes of the pseudo-boehmite, respectively. It shall be noted that the diffraction peak positions "± 0.05°" in the XRD spectrogram indicate the test error of various instruments.

The presence of pseudo-boehmite in the composite oxide according to the present invention can be determined through the XRD characterization.

In the present invention, the XRD characterization is implemented with a D/max-2500X-ray diffractometer manufactured by the RIGAKU Corporation in Japan, a Cu target, a Kα radiation source, a graphite monochromator, a tube voltage of 20-60 kV, a tube current of 10-300mA, the XRD characterization is performed under the conditions comprising a scan range of 10° -70°, a step of 0.01°, and a scanning velocity of 1°/min.

According to a preferred embodiment of the present invention, the pseudo-boehmite content is within a range of 1-50%, preferably within a range of 1-40%, more preferably within a range of 2-30%, based on the total weight of the composite oxide, for example, the content may be 2%, 5%, 10%, 15%, 20%, 25%, 30%, further preferably within a range of 5-15%.

In the present invention, the pseudo-boehmite content in the composite oxide can be measured according to a Thermo-Gravimetric Analysis method of the composite oxide, in particular, the NETZSCH STA 449 F3 thermo-gravimetric analysis instrument manufactured by the NETZSCH Group in German, a programmed temperature rise is performed from 30°C to 800°C in an air atmosphere, the temperature rise rate is 5°C/min, and the airflow rate is 50mL/min, and the content of the pseudo-boehmite is calculated according to the weight loss of the composite oxide. For example, the weight loss of the composite oxide is a%, and the pseudo-boehmite content in the composite oxide is a%/[(0.5~2)×18.02%]×100%, where the structure of the pseudo-boehmite is Al₂O₃·(0.5-2)H₂O. Those skilled in the art can confirm the pseudo-boehmite content according to the amount of the crystallization water in the pseudo-boehmite.

In the present invention, the pseudo-boehmite content in the composite oxide can also be calculated by weight difference before and after the introduction of the pseudo-boehmite in the preparation process.

According to a preferred embodiment of the present invention, the composite oxide has a specific surface area within a range of 300-450 m²/g, more preferably within a range of 380-450 m²/g, such as 380 m²/g, 390 m²/g, 400 m²/g, 410 m²/g, 420 m²/g, 430 m²/g, 440 m²/g, 450 m²/g. Under the preferred embodiment, the composite oxide has an improved specific surface area and surface hydroxyl content and has a higher silicon capacity.

In the present invention, the specific surface area of a sample is analyzed by using N₂-adsorption/desorption, the N₂-adsorption/desorption test conditions are as follows: the catalyst is loaded into the sample tube, and the N₂ adsorption and desorption test is performed at a temperature of 77K using the ASAP 2420 nitrogen physical adsorber manufactured by the MICROMMERITICS Corporation in the USA.

The present invention has no particular limitation on the shape of the composite oxide, which can be adaptively selected according to the particular use scenario. Preferably, the composite oxide has a particle size within a range of 0.5-5mm, more preferably within a range of 1-3.5mm. In the present invention, the particle size has the conventional meaning of the art, and slightly different meanings according to different shapes, for example, when the shape of the composite oxide is irregular, the particle size refers to the maximum straight-line distance between any two different points on the particle; when the shape of the composite oxide is regular (e.g., cylindrical), the particle size refers to the diameter of its cross-section; when the shape of the composite oxide is spherical, the particle size refers to a diameter of the sphere; when the shape of the composite oxide is multi-leaf grass, the particle size refers to its circumscribed circle diameter.

The present invention does not impose particular limitations on the aluminum oxide, which may be various types of aluminum oxides conventionally used in the art. The aluminum oxide may further contain one or more doping elements, for example, at least one selected from the group consisting of phosphorus, silicon, boron, fluorine, sodium, and other element. The doping elements may be added in a conventional addition amount, preferably 0.5%-6% of the mass of said carrier.

The second aspect of the present invention provides a method for preparing the composite oxide, the method comprises introducing pseudo-boehmite on aluminum oxide and then drying to obtain the composite oxide, the surface hydroxyl content of the composite oxide is within a range of 1,000-2,500 µmol/g.

According to the method provided by the present invention, the selection ranges of the surface hydroxyl content, the specific surface area, and the percentage of the aluminum element of the composite oxide may be the same as those in the first aspect, the contents will not be repeatedly described herein.

According to a preferred embodiment of the present invention, the method of introducing the pseudo-boehmite on the aluminum oxide comprises carring out a precipitation reaction with the aluminum source and the precipitating agent in the presence of the aluminum oxide, followed by aging and drying. In the preferred embodiment, an aluminum source and a precipitating agent is mixed with the aluminum oxide to enable the loading of the pseudo-boehmite obtained by the precipitation on the aluminum oxide outer surface.

Preferably, the aluminum oxide, the aluminum source, and the precipitating agent are used in such amounts that the pseudo-boehmite content is within a range of 1-50%, more preferably within a range of 1-40%, further preferably within a range of 2-30%, most preferably within a range of 5-15%, based on the total weight of the composite oxide. Those skilled in the art can appropriately select the used amounts of the aluminum oxide, the aluminum source, and the precipitating agent according to the target pseudo-boehmite content.

The aluminum source of the present invention may be various aluminum sources for preparing pseudo-boehmite in the art, preferably, the aluminum source is an acidic aluminum salt or an alkaline aluminum salt. Those skilled in the art may appropriately select the matched precipitating agent based on the specific kind of aluminum source.

Preferably, the aluminum source is an acidic aluminum salt, and the precipitating agent is at least one selected from the group consisting of NaOH, NH₄OH, and NaAlO₂. Further preferably, the acidic aluminum salt is at least one selected from the group consisting of Al₂(SO₄)₃, AlCl₃, and Al(NO₃)₃.

Preferably, the aluminum source is an alkaline aluminum salt, and the precipitating agent is CO₂. Further preferably, the alkaline aluminum salt is NaAlO₂.

According to a specific embodiment of the present invention, the aluminum source and the precipitating agent are each independently provided in the form of solution.

Preferably, the aluminum source solution has an aluminum source concentration calculated in terms of aluminum oxide within a range from 0.5g/mL to 10g/mL, preferably from 0.5g/mL to 2g/mL.

Preferably, the precipitating agent solution has a precipitating agent concentration within a range from 0.5g/mL to 10g/mL, preferably from 0.5g/mL to 5g/mL.

The manners of introducing the aluminum source and the precipitating agent are not particularly limited in the present invention and may be various manners conventionally used in the art, for example, a solution of the aluminum source and a solution of the precipitating agent are added to the aluminum oxide in a cocurrent flow manner.

In the present invention, the conditions for the precipitation reaction are selected from wide ranges. Preferably, the precipitation reaction conditions comprise a pH of 7.5-11, a temperature of 50-95°C, and a time of 30-120 minutes.

The aging conditions of the present invention are selected from wide ranges. Preferably, the aging conditions comprise a pH of 7.5-11, a temperature of 50-90°C, and a time of 3-24 hours. In the present invention, the pH of said aging reaction can be adjusted by adding an acid or an alkali. The present invention does not impose specific limitations on the kind of acid or alkali, which may be various options conventionally used in the art.

The method provided by the present invention preferably further comprises the step of separating, washing, and drying the aged product after the aging reaction. The separation may be a well-known method in the art, such as the filtration or centrifugation process. The washing and drying methods may be commonly used methods during the process of preparing the pseudo-boehmite, for example, the detergent may be water, and the drying may be at least one of stoving, forced air drying, spray drying, and flash vaporization drying. Preferably, the drying conditions comprise a drying temperature of 90-300°C, and a drying time of 2-12 hours.

The third aspect of the present invention provides a silicon capture agent, the silicon capture agent comprises aluminum oxide, pseudo-boehmite, and an active component comprising a group-VIB metal sulfide and a group-VIII metal sulfide;
The surface hydroxyl content of the silicon capture agent is within a range of 1,000-2,000 µmol/g.

Preferably, the surface hydroxyl content of the silicon capture agent is within a range of 1,200-1,800 µmol/g, e.g. 1,200 µmol/g, 1,300 µmol/g, 1,400 µmol/g, 1,500 µmol/g, 1,600 µmol/g, 1,700 µmol/g, 1,800 µmol/g. The test method for the surface hydroxyl content of the silicon capture agent according to the present invention is the same as that described in the above text, and the specific details will not be repeatedly described herein.

According to the present invention, the content of an aluminum element is preferably within a range of 34.8-51%, further preferably within a range of 39.1-48.6%, such as 35%, 37%, 40%, 42%, 45%, 47%, 48%, based on the total weight of the silicon capture agent. The testing method of the content of Al element in the silicon capture agent in the present invention is the same as that described in the above text, and the specific details will not be repeatedly described herein.

According to the present invention, preferably, the XRD spectrogram of the silicon capture agent shows diffraction peaks at 14.5° ± 0.05°, 28.2° ± 0.05°, 49.2° ± 0.05°. Similarly, the three diffraction peaks correspond to (020), (120), and (200) crystal planes of the pseudo-boehmite, respectively. The presence of pseudo-boehmite in the silicon capture agent of the present invention can be determined by the XRD characterization.

Preferably, the silicon capture agent has a specific surface area within a range of 250-420 m²/g, more preferably within a range of 300-400 m²/g, such as 300 m²/g, 310 m²/g, 320 m²/g, 330 m²/g, 340 m²/g, 350 m²/g, 360 m²/g, 370 m²/g, 380 m²/g, 390 m²/g, 400 m²/g. Under the preferred embodiment, the silicon capture agent has an improved specific surface area and surface hydroxyl content and has a higher silicon capacity.

According to a preferred embodiment of the present invention, the group-VIB metal sulfide and the group-VIII metal sulfide are loaded on the aluminum oxide carrier, the pseudo-boehmite is loaded on the group-VIB metal sulfide, the group-VIII metal sulfide, and the aluminum oxide carrier, use of the preferred embodiment can improve the contact surface between the pseudo-boehmite and the group-VIII metal and the group-VIB metal, enhance the synergic effect of hydrogenation property and silicon capture performance of the silicon capture agent, improve the silicon capability of the silicon capture agent, and reduce the carbon deposition of the silicon capture agent, and prevent the carbon deposition from occupying the silicon capture active sites.

The group-VIB metal sulfide and the group-VIII metal sulfide are loaded on the aluminum oxide carrier, the pseudo-boehmite is loaded on the group-VIB metal sulfide, the group-VIII metal sulfide, and the aluminum oxide carrier.

According to the present invention, the pseudo-boehmite content is preferably within a range of 3-20%, more preferably within a range of 5-15%, further preferably within a range of 5-10%, for example, 5%, 6%, 7%, 8%, 9%, 10%, based on the total weight of the silicon capture agent.

In the present invention, the pseudo-boehmite content in the silicon capture agent can be measured according to a Thermo-Gravimetric Analysis (TGA) method of the composite oxide, in particular, the NETZSCH STA 449 F3 thermo-gravimetric analysis instrument manufactured by the NETZSCH Group in German, a programmed temperature rise is performed from 30°C to 800°C in an argon atmosphere, the temperature rise rate is 5°C/min, and the argon flow rate is 50mL/min, and the content of the pseudo-boehmite is calculated according to the weight loss of the silicon capture agent. For example, the weight loss of the silicon capture agent is a%, and the pseudo-boehmite content in the silicon capture agent is a%/[(0.5 ~ 2) ×18.02%]×100%, where the structure of the pseudo-boehmite is Al₂O₃·(0.5-2)H₂O. Those skilled in the art can confirm the pseudo-boehmite content according to the amount of the crystallization water in the pseudo-boehmite.

In the present invention, the pseudo-boehmite content in the silicon capture agent can also be calculated by weight difference before and after the introduction of the pseudo-boehmite in the preparation process.

According to the present invention, the content of group-VIB metal calculated in terms of sulfide is preferably within a range of 2-20%, more preferably within a range of 5-15%, and the content of group-VIII metal calculated in terms of sulfide is preferably within a range of 1-10%, more preferably within a range of 2-8%, based on the total weight of the silicon capture agent.

In the present invention, the content of the group-VIB metal calculated in terms of sulfide and the content of the group-VIII metal calculated in terms of sulfide in the silicon capture agent are obtained by testing with an ICP and then performing conversion from the oxide to the sulfide.

In the present invention, the group-VIB metal is preferably molybdenum and/or tungsten, and the group-VIII metal is preferably nickel and/or cobalt.

Preferably, the group-VIB metal sulfide is molybdenum sulfide (MoS₂) and/or tungsten sulfide (WS₂), and the group-VIII metal sulfide is nickel sulfide (NiS) and/or cobalt sulfide (CoS).

According to a preferred embodiment of the present invention, the group-VIB metal sulfide is contained in an amount within a range of 1.6-18%, further preferably within a range of 4-12%, and the group-VIII metal sulfide is contained in an amount within a range of 0.8-9%, further preferably within a range of 1.5-5%, based on the total weight of the silicon capture agent.

The contents of the group-VIB metal sulfide and the group-VIII metal sulfide in the silicon capture agent are jointly characterized by the inductively coupled plasma (ICP) and the X-ray photoelectron spectroscopy (XPS), in particular, the total content of the group-VIB metal and the total content of the group-VIII metal in the silicon capture agent are initially characterized by ICP, the contents of the metal elements with different valence states in the silicon capture agent are quantitatively characterized by the XPS energy dispersion spectroscopy. The measurement conditions of the XPS energy spectrum comprise: the vacuum degree of the analysis chamber is less than or equal to 5×10⁻¹⁰ mbar; the vacuum degree of the preparation chamber is less than or equal to 1×10⁻⁷ mbar; the bi-anode sensitivity is 4.5×10⁶, the energy resolution is 1.0 eV; the monochromator sensitivity is 1.4×10⁵, the energy resolution is 0.5 eV. The Mo3d, W4f, Co2p, and Ni2p energy spectra are subjected to the fitting and peak division by using XPSPEAK Version 4.0, and the contents of the metal elements with different valence states in the silicon capture agent are calculated according to the peak areas.

According to the present invention, the content of aluminum oxide is within a range of 50-96%, preferably within a range of 62-88%, for example, 62%, 65%, 68%, 70%, 72%, 75%, 78%, 80%, 82%, 85%, 88%, based on the total weight of the silicon capture agent.

The fourth aspect of the present invention provides a method for preparing the silicon capture agent, the method comprising the following steps:
(1) introducing a group-VIB metal compound and a group-VIII metal compound into an aluminum oxide carrier through an impregnation method, subsequently carrying out a calcination and sulfurization process to obtain a silicon capture agent precursor;
(2) subjecting an aluminum source and a precipitating agent to a precipitation reaction in the presence of the silicon capture agent precursor, then carrying out an aging and drying process.

In the method provided in the present invention, the impregnation method is not particularly limited, it may be either an equal-volume impregnation or a supersaturated impregnation. The group-VIB metal compound and the group-VIII metal compound can be simultaneously introduced into the aluminum oxide carrier by co-impregnation, or separately introduced into the aluminum oxide carrier by the step-by-step impregnation, the sequence of introducing the two compounds is not particularly limited in the present invention.

Preferably, the group-VIB metal compound and the group-VIII metal compound can be introduced into the aluminum oxide carrier by co-impregnation.

According to the method provided by the present invention, preferably, the method comprises impregnating an aluminum oxide carrier with an impregnation solution containing a group-VIB metal compound and a group-VIII metal compound, and then drying. The drying conditions preferably comprise a temperature of 20-120°C, and a time of 4-16 hours.

The formulation method of the impregnation solution is well-known among those skilled in the art.

The present invention has a wide range of solvent options for the impregnation solution, as long as it provides the desired environment for impregnation, the solvent may be water, for example.

The present invention has a wide range of species choices for the group-VIB metal compound and the group-VIII metal compound, provided that the group-VIB metal compound and the group-VIII metal compound can be subsequently converted into the respective metal sulfides. Preferably, the group-VIB metal compound is a phosphate and/or an ammonium salt of a group-VIB metal; preferably, the group-VIII metal compound is at least one selected from the group consisting of nitrates, carbonates, phosphates, sulfates, basic carbonates, and acetates of a group-VIII metal.

Preferably, the calcination conditions in step (1) comprise a calcination temperature within a range of 300-600°C and a calcination time within a range of 3-6 hours.

The sulfurization in step (1) is not particularly limited in the present invention, it may be carried out through the conventional methods generally known in the art, provided that the active metal in the oxidation state hydrogenation catalyst obtained from calcination is converted to the sulfurization state, the generally known sulfurization method can be adopted, preferably the sulfurization is a dry process sulfurization or a wet process sulfurization. The dry process sulfurization and the wet process sulfurization as depicted in the present invention have the conventional paraphrase in the field.

Preferably, the sulfurization conditions comprise a sulfurization pressure within a range of 3.2-6.4MPa, a sulfurization temperature within a range of 250-400°C, a sulfurization time within a range of 4-12h, and a flow rate of hydrogen gas within a range of 2-25 mL·min⁻¹·g⁻¹.

According to a preferred embodiment of the present invention, the dry process sulfurizing agent used for the dry process sulfurization is hydrogen sulfide. In particular, the sulfurization gas used in the dry process sulfurization comprises hydrogen sulfide and hydrogen gas. Preferably, the volume content of hydrogen sulfide in the sulfurization gas is within a range of 1-10%.

According to a preferred embodiment of the present invention, the wet process sulfurizing agent used for the wet process sulfurization is at least one selected from the group consisting of carbon disulfide, dimethyl disulfide, methyl sulfide, and n-butyl sulfide. In particular, the sulfurization solution used in the wet process sulfurization comprises a wet process sulfurizing agent and an organic solvent. Preferably, the organic solvent is at least one selected from the group consisting of cyclohexane, n-heptane, aviation kerosene, and diesel. The mass fraction of the wet process sulfurizing agent in the sulfurization solution is selected from a wide range, preferably within a range from 2% to 7%, more preferably within a range from 4% to 6%. Preferably, the flow rate of the sulfurization solution is within a range of 0.5-5 mL·h⁻¹·g⁻¹, more preferably within a range of 1-4 mL·h⁻¹·g⁻¹.

According to a preferred embodiment of the present invention, the silicon capture agent precursor, the aluminum source, and the precipitating agent are used in such amounts that the content of pseudo-boehmite in the prepared silicon capture agent is within a range of 3-20%, more preferably within a range of 5-15%, further preferably within a range of 5-10%, based on the total weight of the silicon capture agent. According to the method provided by the present invention, the pseudo-boehmite content may be calculated based on the weight difference between the silicon capture agent precursor and the finally produced silicon capture agent.

According to a preferred embodiment of the present invention, the aluminum oxide carrier, the group-VIB metal compound, the group-VIII metal compound, the aluminum source, and the precipitating agent are used in such amounts that in the prepared silicon capture agent, the content of the group-VIB metal calculated in terms of sulfide is within a range of 2-20%, more preferably within a range of 5-15%; the content of group-VIII metal calculated in terms of sulfide is within a range of 1-10%, more preferably within a range of 2-8%; the content of the aluminum oxide is within a range of 50-96%, more preferably within a range of 62-88%, based on the total weight of the silicon capture agent. The used amounts of the group-VIB metal compound, the group-VIII metal compound, the aluminum source, and the precipitating agent can be appropriately selected by those skilled in the art according to the requirement.

In the preparation method for a silicon capture agent provided by the present invention, the selection ranges of the kinds of the aluminum source and the precipitating agent are as described above in the second aspect, and the content will not be repeatedly described herein.

In the preparation method for a silicon capture agent provided in the present invention, the conditions for the precipitation reaction and aging are selected from the range as described above in the second aspect, and the content will not be repeatedly described herein.

Preferably, the precipitation reaction and aging process in step (2) are carried out under an inert atmosphere. Said inert atmosphere may be provided by an inert gas. In the present invention, the inert gas includes but is not limited to at least one selected from the group consisting of nitrogen gas, helium gas, argon gas, and neon gas.

The method provided by the present invention preferably further comprises the step of separating, washing, and drying the aged product after the aging reaction. The separation may be a well-known method in the art, such as the filtration or centrifugation process. The washing and drying methods may be commonly used methods during the process of preparing the pseudo-boehmite, for example, the detergent may be water, and the drying may be at least one of stoving, forced air drying, spray drying, and flash vaporization drying. Preferably, the drying conditions comprise a drying temperature of 90-300°C, and a drying time of 2-12 hours.

The fifth aspect of the present invention provides a silicon capture agent produced with the method according to the fourth aspect mentioned above.

The sixth aspect of the present invention provides a use of the composite oxide according to the first aspect mentioned above or the silicon capture agent according to the third aspect or the fifth aspect in the treatment of a silicon-containing oil product.

The composite oxide provided by the present invention has an enhanced silicon capacity, it is suitable for the desilication treatment of a silicon-containing oil product. The silicon capture agent provided by the present invention not only has an improved silicon capacity but also has an enhanced hydrogenation property to prevent the carbon deposition of the silicon capture agent from occupying the silicon capture active site, exhibits a synergistic effect of the enhanced hydrogenation performance and the silicon capture property.

The seventh aspect of the present invention provides a method for treating a silicon-containing oil product, the method comprises the following steps: contacting the silicon-containing oil product with the composite oxide according to the first aspect mentioned above or the silicon capture agent according to the third aspect or the fifth aspect under the hydrotreatment conditions.

The present invention has a wide selection range for the silicon-containing oil product, and the treatment method provided by the present invention is applicable to the desilication treatment of most silicon-containing oil products, preferably, the silicon-containing oil product has a silicon content within a range of 1-1,000 µg/g, further preferably, the silicon-containing compound in the silicon-containing oil product is selected from siloxane and/or silane.

In the present invention, the siloxane comprises a compound containing Si-O-Si bonds, it may be chain-typed and/or cyclic. The siloxane may include, but is not limited to, tetramethylcyclotetrasiloxane and trimethylcyclotrisiloxane.

Preferably, the silicon-containing oil product is at least one selected from the group consisting of straight-run naphtha, straight-run diesel, aviation kerosene, wax oil, coking dry gas, coking naphtha, and coking diesel.

According to a preferred embodiment of the present invention, the hydrotreatment conditions comprise a pressure a range of 2-10MPa, a reaction temperature within a range of 220-400°C, more preferably within a range of 220-350°C, a hydrogen/oil volume ratio within a range of 200-800: 1, and a volume space velocity within a range of 1-10 h⁻¹.

According to the present invention, the silicon capture agent can be used directly without sulfurization before use.

The preparation process and product properties of the present invention are further illustrated below with reference to the examples and comparative examples, but the following examples do not constitute a limitation to the process of the present invention.

In the following examples and comparative examples, the contents of pseudo-boehmite were tested by thermo-gravimetric analysis method, the specific test methods and conditions were described in the DESCRIPTION OF THE PREFERRED EMBODIMENT of the present invention.

The surface hydroxyl contents of the composite oxide and the silicon capture agent were analyzed and obtained through the FTIR (Fourier Transform Infrared Spectroscopy), and the specific test methods and conditions were described in the DESCRIPTION OF THE PREFERRED EMBODIMENT of the present invention.

The analysis of the content of each element was determined by ICP, the specific test methods and conditions were described in the DESCRIPTION OF THE PREFERRED EMBODIMENT of the present invention.

The specific surface area of a sample was analyzed using N₂-adsorption/desorption, the N₂-adsorption/desorption test conditions were as follows: the catalyst was loaded into the sample tube, and the N₂ adsorption and desorption test was performed at a temperature of 77K using the ASAP 2420 nitrogen physical adsorber manufactured by the MICROMMERITICS Corporation in the USA.

The contents of the group-VIB metal sulfide and the group-VIII metal sulfide in the silicon capture agent were jointly characterized by the inductively coupled plasma (ICP) and the X-ray photoelectron spectroscopy (XPS), the specific test methods and conditions were described in the DESCRIPTION OF THE PREFERRED EMBODIMENT of the present invention.

### Example 1

(1) The impregnation solution containing ammonium heptamolybdate and nickel nitrate was used for the equivalent-volume impregnation of an aluminum oxide carrier (the carrier had a cylindrical shape and a particle size (cross-sectional diameter) of 1.5mm), the impregnated carrier was subjected to drying at 110°C for 3 hours, and calcination at 400°C for 3 hours, then subjected to a sulfurization treatment by using hydrogen gas containing 1.5 vol.% of H₂S, wherein the sulfurization temperature was 330°C, the sulfurization pressure was 3.2MPa, the sulfurization time was 5h, subsequently cooled to room temperature in N₂ atmosphere, a catalyst precursor was obtained.
(2) An aluminum sulfate solution (wherein the aluminum oxide content was 0.9g/mL) and a sodium aluminate solution (wherein the aluminum oxide content was 0.9g/mL) were added in a concurrent flow manner to the catalyst precursor produced in step (1), the temperature was controlled to 70°C and the pH was controlled to 8.5, a coprecipitation reaction was carried out for 30min, the reaction product was subjected to aging at the temperature of 70°C and the pH of 8.5 for 4 hours, the precipitation and aging process was conducted in a nitrogen gas atmosphere, after the filtration and washing process, subjected to drying in a nitrogen atmosphere at 110°C for 3 hours, the silicon capture agent C-1 was prepared.

The component contents, the specific surface area, and the surface hydroxyl content of the silicon capture agent were illustrated in Table 1 and Table 2.

The XRD spectrogram of the silicon capture agent C-1 was shown in FIG. 1. The XRD spectrogram showed the diffraction peaks at 14.5°, 28.2°, 49.2°, the three diffraction peaks were corresponding to (020), (120), and (200) crystal planes of the pseudo-boehmite, respectively.

### Example 2

(1) The impregnation solution containing ammonium heptamolybdate and cobalt nitrate was used for the equivalent-volume impregnation of an aluminum oxide carrier (the carrier had a cylindrical shape and a particle size (cross-sectional diameter) of 2.0mm), the impregnated carrier was subjected to drying at 120°C for 5 hours, and calcination at 450°C for 4 hours, then subjected to a sulfurization treatment by using hydrogen gas containing 1.5 vol.% of H₂S, wherein the sulfurization temperature was 340°C, the sulfurization pressure was 3.6MPa, the sulfurization time was 5h, subsequently cooled to room temperature in N₂ atmosphere, a catalyst precursor was obtained.
(2) An aluminum sulfate solution (wherein the aluminum oxide content was 1.2g/mL) and a sodium hydroxide solution were added in a concurrent flow manner to the catalyst precursor produced in step (1), and the temperature was controlled to 80°C and the pH was controlled to 8.5, a coprecipitation reaction was carried out for 90min, the reaction product was subjected to aging at the temperature of 80°C and the pH of 8.5 for 4 hours, the precipitation and aging process was conducted in a nitrogen gas atmosphere, after the filtration and washing process, subjected to drying in a nitrogen atmosphere at 100°C for 4 hours, the silicon capture agent C-2 was prepared.

### Example 3

(1) The impregnation solution containing ammonium heptamolybdate, nickel nitrate, and cobalt nitrate was used for the equivalent-volume impregnation of an aluminum oxide carrier (the carrier had a clover shape and a particle size (circumscribed circle diameter) of 1.5mm), the impregnated carrier was subjected to drying at 120°C for 4 hours, and calcination at 500°C for 3 hours, then subjected to a sulfurization treatment by using hydrogen gas containing 1.5 vol.% of H₂S, wherein the sulfurization temperature was 360°C, the sulfurization pressure was 4.2MPa, the sulfurization time was 6h, subsequently cooled to room temperature in N₂ atmosphere, a catalyst precursor was obtained.
(2) An aluminum nitrate solution (wherein the aluminum oxide content was 0.9g/mL) and a sodium metaaluminate solution (wherein the aluminum oxide content was 0.9g/mL) were added in a concurrent flow manner to the catalyst precursor produced in step (1), the temperature was controlled to 80°C and the pH was controlled to 8.5, a coprecipitation reaction was carried out for 50min, the reaction product was subjected to aging at the temperature of 80°C and the pH of 8.5 for 3 hours, the precipitation and aging process was conducted in a nitrogen gas atmosphere, after the filtration and washing process, subjected to drying in a nitrogen atmosphere at 100°C for 5 hours, the silicon capture agent C-3 was prepared.

### Example 4

(1) The impregnation solution containing ammonium metatungstate and nickel nitrate was used for the equivalent-volume impregnation of an aluminum oxide carrier (the carrier had a spherical shape and a particle size of 1.8mm), the impregnated carrier was subjected to drying at 120°C for 4 hours, and calcination at 500°C for 3 hours, then subjected to a sulfurization treatment by using hydrogen gas containing 2.5 vol.% of H₂S, wherein the sulfurization temperature was 360°C, the sulfurization pressure was 4.2MPa, the sulfurization time was 4h, subsequently cooled to room temperature in N₂ atmosphere, a catalyst precursor was obtained.
(2) An aluminum chloride solution (wherein the aluminum oxide content was 1.5g/mL) and a sodium metaaluminate solution (wherein the aluminum oxide content was 1.5g/mL) were added in a concurrent flow manner to the catalyst precursor produced in step (1), the temperature was controlled to 80°C and the pH was controlled to 8.5, a coprecipitation reaction was carried out for 60min, the reaction product was subjected to aging at the temperature of 80°C and the pH of 8.5 for 3 hours, the precipitation and aging process was conducted in a nitrogen gas atmosphere, after the filtration and washing process, subjected to drying in a nitrogen atmosphere at 130°C for 5 hours, the silicon capture agent C-4 was prepared.

### Example 5

(1) The impregnation solution containing ammonium metatungstate and cobalt nitrate was used for the equivalent-volume impregnation of an aluminum oxide carrier (the carrier had a cylindrical shape and a particle size (cross-sectional diameter) of 1.5mm), the impregnated carrier was subjected to drying at 120°C for 4 hours, and calcination at 500°C for 3 hours, then subjected to a sulfurization treatment by using the aviation kerosene containing 3wt% of carbon disulfide, wherein the sulfurization temperature was 340°C, the sulfurization pressure was 4.0MPa, the sulfurization time was 6h, subsequently cooled to room temperature in N₂ atmosphere, a catalyst precursor was obtained.
(2) An aluminum sulfate solution (wherein the aluminum oxide content was 1.8g/mL) and a sodium metaaluminate solution (wherein the aluminum oxide content was 1.8g/mL) were added in a concurrent flow manner to the catalyst precursor produced in step (1), the temperature was controlled to 80°C and the pH was controlled to 8.0, a coprecipitation reaction was carried out for 50min, the reaction product was subjected to aging at the temperature of 80°C and the pH of 8.0 for 3 hours, the precipitation and aging process was conducted in a nitrogen gas atmosphere, after the filtration and washing process, subjected to drying in a nitrogen atmosphere at 100°C for 5 hours, the silicon capture agent C-5 was prepared.

### Example 6

(1) The impregnation solution containing ammonium metatungstate, nickel nitrate, and cobalt nitrate was used for the equivalent-volume impregnation of an aluminum oxide carrier (the carrier had a four-leaf clover shape and a particle size (circumscribed circle diameter) of 1.5mm), the impregnated carrier was subjected to drying at 120°C for 4 hours, and calcination at 500°C for 3 hours, then subjected to a sulfurization treatment by using aviation kerosene containing 3wt% of carbon disulfide, wherein the sulfurization temperature was 350°C, the sulfurization pressure was 4.0MPa, the sulfurization time was 6h, subsequently cooled to room temperature in N₂ atmosphere, a catalyst precursor was obtained.
(2) An aluminum sulfate solution (wherein the aluminum oxide content was 1.8g/mL) and a sodium metaaluminate solution (wherein the aluminum oxide content was 1.8g/mL) were added in a concurrent flow manner to the catalyst precursor produced in step (1), the temperature was controlled to 80°C and the pH was controlled to 8.5, a coprecipitation reaction was carried out for 80min, the reaction product was subjected to aging at the temperature of 80°C and the pH of 8.5 for 3 hours, the precipitation and aging process was conducted in a nitrogen gas atmosphere, after the filtration and washing process, subjected to drying in a nitrogen atmosphere at 100°C for 5 hours, the silicon capture agent C-6 was prepared.

### Example 7

(1) The impregnation solution containing ammonium metatungstate, ammonium heptamolybdate, and nickel nitrate was used for the equivalent-volume impregnation of an aluminum oxide carrier (the carrier had a cylindrical shape and a particle size (cross-sectional diameter) of 1.7mm), the impregnated carrier was subjected to drying at 120°C for 4 hours, and calcination at 400°C for 3 hours, then subjected to a sulfurization treatment by using the aviation kerosene containing 3wt% of carbon disulfide, wherein the sulfurization temperature was 360°C, the sulfurization pressure was 4.0MPa, the sulfurization time was 6h, subsequently cooled to room temperature in N₂ atmosphere, a catalyst precursor was obtained.
(2) An aluminum sulfate solution (wherein the aluminum oxide content was 1.0g/mL) and a sodium metaaluminate solution (wherein the aluminum oxide content was 1.0g/mL) were added in a concurrent flow manner to the catalyst precursor produced in step (1), the temperature was controlled to 80°C and the pH was controlled to 8.5, a coprecipitation reaction was carried out for 60min, the reaction product was subjected to aging at the temperature of 80°C and the pH of 8.5 for 3 hours, the precipitation and aging process was conducted in a nitrogen gas atmosphere, after the filtration and washing process, subjected to drying in a nitrogen atmosphere at 100°C for 5 hours, the silicon capture agent C-7 was prepared.

### Comparative Example 1

The silicon capture agent was prepared according to the same method as that in Example 1, except that the sulfurization in step (1) was not implemented, the sulfurization in step (2) was conducted after loading the pseudo-boehmite, the sulfurization conditions were as follows: the sulfurization treatment was performed by using aviation kerosene containing 3wt% of carbon disulfide, wherein the sulfurization temperature was 360°C, the sulfurization pressure was 4.0MPa, the sulfurization time was 6h, the comparative silicon capture agent DC-1 was prepared.

### Comparative Example 2

The silicon capture agent was prepared according to the same method as that in Example 1, except that a calcination process was added after drying in step (2), the calcination conditions comprised calcination in a nitrogen gas atmosphere at 450°C for 3 hours, the comparative silicon capture agent DC-2 was prepared.

### Comparative Example 3

The silicon capture agent was prepared according to the same method as that in Example 1, except that step (2) was not included in the preparation process, the comparative silicon capture agent DC-3 was prepared.

**Table 1**

| No. | Mo,% | W,% | Ni,% | Co,% | Al₂O₃, % | Pseudo-boehmite, % |
|---|---|---|---|---|---|---|
| C-1 | 9.3 | | 4.6 | - | 80.9 | 5.2 |
| C-2 | 9.6 | - | - | 3.1 | 80.5 | 6.8 |
| C-3 | 10.6 | - | 2.7 | 1.1 | 78.4 | 7.2 |
| C-4 | - | 11.5 | 3.6 | - | 77 | 7.9 |
| C-5 | - | 12.4 | - | 4.8 | 74.7 | 8.1 |
| C-6 | - | 14.2 | 1.1 | 2.4 | 73.1 | 9.2 |
| C-7 | 6.1 | 6.6 | 4.2 | - | 76.8 | 6.3 |
| DC-1 | 9.3 | - | 4.6 | - | 80.9 | 5.2 |
| DC-2 | 9.3 | - | 4.6 | - | 80.9 | 5.2 |
| DC-3 | 9.3 | - | 4.6 | - | 86.1 | - |

| | | | | | | |
|---|---|---|---|---|---|---|
| Note: the amounts of Mo, W, Ni, and Co in Table 1 are based on the respective sulfides. | | | | | | |

**Table 2**

| No. | MoS₂, % | WS₂, % | NiS, % | CoS, % | Al, % | Specific surface area, m²/g | Surface hydroxyl content, µmol/g |
|---|---|---|---|---|---|---|---|
| C-1 | 6.98 | - | 3.45 | - | 44.97 | 346 | 1316 |
| C-2 | 7.49 | - | - | 2.42 | 45.43 | 352 | 1432 |
| C-3 | 9.54 | - | 0.99 | 1.10 | 44.48 | 364 | 1562 |
| C-4 | - | 10.12 | 3.17 | - | 44.04 | 372 | 1599 |
| C-5 | - | 9.92 | - | 3.84 | 42.90 | 372 | 1606 |
| C-6 | - | 11.79 | 0.91 | 1.99 | 42.52 | 389 | 1712 |
| C-7 | 5.19 | 5.61 | 3.57 | - | 43.26 | 349 | 1406 |
| DC-1 | 7.91 | - | 3.91 | - | 44.97 | 298 | 756 |
| DC-2 | 6.98 | - | 3.45 | - | 44.97 | 288 | 897 |
| DC-3 | 6.98 | - | 3.45 | - | 45.55 | 236 | 688 |

| | | | | | | | |
|---|---|---|---|---|---|---|---|
| Note: the amounts of MoS₂, WS₂, NiS, and CoS in Table 2 refer to the contents of group-VIB metal sulfide, and the contents of group-VIII metal sulfide, based on the total weight of the silicon capture agent. | | | | | | | |

### Test Example 1

The test example served to illustrate the silicon capture activity of the silicon capture agent provided by the present invention for the coking naphtha.

The feedstock oil used for evaluation was a coking naphtha feedstock supplied by a refinery plant under the China Petroleum & Chemical Corporation (Sinopec), its main properties were as follows: a sulfur content of 3,442 µg/g, a nitrogen content of 89 µg/g, an initial boiling point of 90°C, a final boiling point of 220°C, a density of 0.7982 g/cm³, the silicide types were tetramethylcyclotetrasiloxane, and trimethylcyclotrisiloxane, the silicon content calculated in terms of Si was 125 µg/g. The evaluations of hydrogenation performance and silicon capture capacity of the silicon capture agents C-1 to C-7 and the comparative silicon capture agents DC-1 to DC-3 were performed respectively by using a 200mL fixed bed hydrogenation unit, the loading amount of a silicon capture agent was 50mL.

The reaction conditions for evaluation were as follows: an operating pressure of 3.0MPa, a reaction temperature of 250°C, hydrogen/oil volume ratio of 200: 1, a volumetric space velocity of 5.0h⁻¹, the hydrodesulfurization ratio, the hydrodenitrogenation ratio, and the desilication ratio of the silicon capture agents after operation for 50h were shown in Table 3 respectively. After the silicon capture agent was operated for 300h, the silicon capture agent was discharged and then calcinated in an air atmosphere at 500°C for 3h, the SiO₂ content of the silicon capture agents was analyzed by using the XRF. The evaluation results were shown in Table 4. The silicon capacity was calculated based on the following formula: silicon capacity = ((SiO₂ content measured by XRF) / (l - (SiO₂ content measured by XRF)) *100.

**Table 3**

| | Catalyst No. | Desilication ratio, % | | Desulfurization ratio, % | | Denitrogenation ratio, % | |
|---|---|---|---|---|---|---|---|
| | C-1 | | 94.2 | | 96.5 | | 92.7 |
| | C-2 | | 97.8 | | 97.2 | | 93.1 |
| | C-3 | | 98.1 | | 97.9 | | 94.7 |
| | C-4 | | 98.2 | | 98.3 | | 95.1 |
| | C-5 | | 99.4 | | 99.1 | | 95.4 |
| | C-6 | | 99.9 | | 99.8 | | 96.1 |
| | C-7 | | 93.1 | | 96.8 | | 92.6 |
| | DC-1 | | 78.1 | | 85.4 | | 81.2 |
| | DC-2 | | 65.3 | | 82.1 | | 79.2 |
| | DC-3 | | 61.4 | | 75.4 | | 67.4 |

**Table 4**

| | Catalyst No. | Silicon capacity (calculated in terms of SiO₂), % | |
|---|---|---|---|
| | C-1 | | 29.4 |
| | C-2 | | 30.0 |
| | C-3 | | 31.2 |
| | C-4 | | 32.0 |
| | C-5 | | 32.0 |
| | C-6 | | 33.6 |
| | C-7 | | 29.7 |
| | DC-1 | | 18.6 |
| | DC-2 | | 17.5 |
| | DC-3 | | 12.8 |

As can be seen from Table 3 and Table 4, the silicon capture agents of the present invention have higher hydrodesulfurization and denitrogenation activity and have higher desilication performance and silicon capacity.

The following examples serve to illustrate the preparation of the composite oxide provided by the present invention.

### Example 8

An aluminum sulfate solution (wherein the aluminum oxide content was 0.9g/mL) and a sodium metaaluminate solution (wherein the aluminum oxide content was 0.9g/mL) were added in a concurrent flow manner to the aluminum oxide (it had a cylindrical shape and a particle size (cross-sectional diameter) of 1.5mm), the temperature was controlled to 70°C and the pH was controlled to 8.5, a coprecipitation reaction was carried out for 50min, the reaction product was subjected to aging at the temperature of 70°C and the pH of 8.5 for 4 hours, after the filtration and washing process, then subjected to drying at 110°C for 3 hours, the composite oxide AO-1 was prepared.

The component contents, the specific surface area, and the surface hydroxyl content of the composite oxide were illustrated in Table 5.

The SEM image of the composite oxide AO-1 was shown in FIG. 2, as can be seen from FIG. 2, the pseudo-boehmite particles were coated on the surface of the aluminum oxide particles.

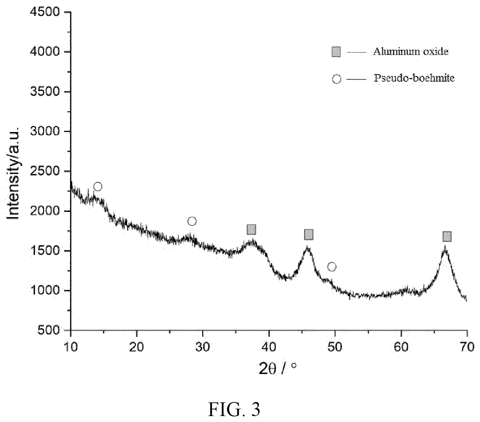

The XRD spectrogram of the composite oxide AO-1 was shown in FIG. 3, as can be seen from FIG.3, the composite oxide AO-1 had diffraction peaks at 14.5°, 28.2°, and 49.2°, and the three diffraction peaks corresponded to (020), (120), and (200) crystal planes of the pseudo-boehmite, respectively.

### Example 9

An aluminum nitrate solution (wherein the aluminum oxide content was 1.0g/mL) and a sodium metaaluminate solution (wherein the aluminum oxide content was 0.9g/mL) were added in a concurrent flow manner to the aluminum oxide (same as that in Example 8), the temperature was controlled to 80°C and the pH was controlled to 7.5, a coprecipitation reaction was carried out for 60min, the reaction product was subjected to aging at the temperature of 80°C and the pH of 8.0 for 2 hours, after the filtration and washing process, then subjected to drying at 110°C for 3 hours, the composite oxide AO-2 was prepared.

The component contents, the specific surface area, and the surface hydroxyl content of the composite oxide were illustrated in Table 5.

### Example 10

An aluminum sulfate solution (wherein the aluminum oxide content was 1.8g/mL) and a sodium hydroxide solution were added in a concurrent flow manner to the aluminum oxide (same as that in Example 8), the temperature was controlled to 70°C and the pH was controlled to 7.5, a coprecipitation reaction was carried out for 90min, the reaction product was subjected to aging at the temperature of 70°C and the pH of 8.0 for 2 hours, after the filtration and washing process, then subjected to drying at 110°C for 3 hours, the composite oxide AO-3 was prepared.

The component contents, the specific surface area, and the surface hydroxyl content of the composite oxide were illustrated in Table 5.

**Table 5**

| No. | Al₂O₃, % | Pseudo-boehmite, % | Al, % | Specific surface area, m²/g | Surface hydroxyl content, µmol/g |
|---|---|---|---|---|---|
| C-1 | 92.7 | 7.24 | 50.9 | 412 | 1752 |
| C-2 | 85.5 | 14.5 | 51.5 | 409 | 1874 |
| C-3 | 89.8 | 10.2 | 51.9 | 410 | 1764 |

### Test Example 2

The test example served to illustrate the silicon capture activity of the composite oxide provided by the present invention for a silicide.

The feedstock oil used for evaluation was refined naphtha doped with tetramethylcyclosiloxane, its main properties were as follows: a sulfur content of 0.6 µg/g, nitrogen content of 0.3 µg/g, an initial boiling point of 90°C, a final boiling point of 200°C, a density of 0.7312 g/cm³, the silicon content calculated in terms of Si was 125 µg/g. The evaluations of the silicon capture capacity of the composite oxides AO-1 to AO-3 were performed respectively by using a 200mL fixed bed hydrogenation unit, the loading amount of the composite oxide was 50mL.

The reaction conditions for evaluation were as follows: an operating pressure of 3.0MPa, a reaction temperature of 250°C, hydrogen/oil volume ratio of 200:1, a volumetric space velocity of 5.0h⁻¹, after the composite oxide was operated for 300h, the composite oxide was discharged, and then calcinated in an air atmosphere at 500°C for 3h, the SiO₂ content of the composite oxides was analyzed by using the XRF. The evaluation results were shown in Table 6. The silicon capacity was calculated based on the following formula: silicon capacity = ((SiO₂ content measured by XRF) / (l - (SiO₂ content measured by XRF)) *100.

**Table 6**

| | Catalyst No. | Silicon capacity (calculated in terms of SiO₂), % | |
|---|---|---|---|
| | AO-1 | | 35.6 |
| | AO-2 | | 36.7 |
| | AO-3 | | 35.9 |

## Claims

1. A composite oxide, is **characterized in that** the composite oxide comprises aluminum oxide and pseudo-boehmite, wherein the pseudo-boehmite is loaded on an outer surface of the aluminum oxide, and the surface hydroxyl content of the composite oxide is within a range of 1,000-2,500 µmol/g.

2. The composite oxide according to claim 1, wherein the surface hydroxyl content of the composite oxide is within a range of 1,500-2,000 µmol/g;
preferably, the aluminum element accounts for 47.3-52.8%, more preferably 48.5-52%, based on the total weight of the composite oxide.

3. The composite oxide according to claim 1 or 2, wherein the XRD spectrogram of the composite oxide shows diffraction peaks at 14.5° ± 0.05°, 28.2° ± 0.05°, 49.2° ± 0.05°;
and/or, the pseudo-boehmite content is within a range of 1-50%, preferably within a range of 1-40%, more preferably within a range of 2-30%, based on the total weight of the composite oxide;
and/or, the composite oxide has a specific surface area within a range of 300-450 m²/g;
and/or, the composite oxide has a particle size within a range of 0.5-5mm,
preferably within a range of 1-3.5mm.

4. A method for preparing the composite oxide, the method comprises introducing pseudo-boehmite on aluminum oxide and then drying to obtain the composite oxide, the surface hydroxyl content of the composite oxide is within a range of 1,000-2,500 µmol/g;
preferably, the aluminum element accounts for 47.3-52.8%, more preferably 48.5-52%, based on the total weight of the composite oxide.

5. The preparation method according to claim 4, wherein the method of introducing the pseudo-boehmite onto the aluminum oxide comprises:
subjecting an aluminum source and a precipitating agent to a precipitation reaction in the presence of aluminum oxide, then carrying out the aging and drying process;
preferably, the aluminum oxide, the aluminum source, and the precipitating agent are used in such amounts that the pseudo-boehmite content is within a range of 1-50%, more preferably within a range of 1-40%, further preferably within a range of 2-30%, based on the total weight of the composite oxide;
preferably, the aluminum source is an acidic aluminum salt or an alkaline aluminum salt; further preferably, the acidic aluminum salt is at least one selected from the group consisting of Al₂(SO₄)₃, AlCl₃, and Al(NO₃)₃;
and/or, the alkaline aluminum salt is NaAlO₂;
preferably, the aluminum source is an acidic aluminum salt, and the precipitating agent is at least one selected from the group consisting of NaOH, NH₄OH, and NaAlO₂; and/or the aluminum source is an alkaline aluminum salt, and the precipitating agent is CO₂;
preferably, the precipitation reaction conditions comprise a pH of 7.5-11, a temperature of 50-95°C, and a time of 30-120 minutes;
preferably, the aging conditions comprise a pH of 7.5-11, a temperature of 50-90°C, and a time of 3-24 hours.

6. A silicon capture agent, is **characterized in that** the silicon capture agent comprises aluminum oxide, pseudo-boehmite, and an active component comprising a group-VIB metal sulfide and a group-VIII metal sulfide;
the surface hydroxyl content of the silicon capture agent is within a range of 1,000-2,000 µmol/g.

7. The silicon capture agent according to claim 6, wherein the surface hydroxyl content of the silicon capture agent is within a range of 1,200-1,800 µmol/g;
preferably, the content of an aluminum element is with a range of 34.8-51%, more preferably 39.1-48.6%, based on the total weight of the silicon capture agent.

8. The silicon capture agent according to claim 6 or 7, wherein the XRD spectrogram of the silicon capture agent shows diffraction peaks at 4.5° ± 0.05°, 28.2° ± 0.05°, 49.2° ± 0.05°;
preferably, the silicon capture agent has a specific surface area within a range of 250-420 m²/g.

9. The silicon capture agent according to any one of claims 6-8, wherein the group-VIB metal sulfide and the group-VIII metal sulfide are loaded on an aluminum oxide carrier, the pseudo-boehmite is loaded on a group-VIB metal sulfide, a group-VIII metal sulfide, and an aluminum oxide carrier.

10. The silicon capture agent according to any one of claims 6-9, wherein the pseudo-boehmite content is within a range of 3-20%, preferably within a range of 5-15%, based on the total weight of the silicon capture agent;
and/or, the content of group-VIB metal calculated in terms of sulfide is within a range of 2-20%, preferably within a range of 5-15%, and the content of group-VIII metal calculated in terms of sulfide is within a range of 1-10%, preferably within a range of 2-8%, based on the total weight of the silicon capture agent;
and/or, the group-VIB metal sulfide is molybdenum sulfide and/or tungsten sulfide, and the group-VIII metal sulfide is nickel sulfide and/or cobalt sulfide;
and/or, the content of aluminum oxide is within a range of 50-96%, preferably within a range of 62-88%, based on the total weight of the silicon capture agent.

11. A method for preparing the silicon capture agent, the method comprising the following steps:
(1) introducing a group-VIB metal compound and a group-VIII metal compound into an aluminum oxide carrier through an impregnation method, subsequently carrying out a calcination and sulfurization process to obtain a silicon capture agent precursor;
(2) subjecting an aluminum source and a precipitating agent to a precipitation reaction in the presence of the silicon capture agent precursor, then carrying out an aging and drying process.

12. The method according to claim **11,** wherein the silicon capture agent precursor, the aluminum source, and the precipitating agent are used in such amounts that the content of pseudo-boehmite in the prepared silicon capture agent is within a range of 3-20%, preferably within a range of 5-15%, based on the total weight of the silicon capture agent.

13. The method according to claim 11, wherein the aluminum oxide carrier, the group-VIB metal compound, the group-VIII metal compound, the aluminum source, and the precipitating agent are used in such amounts that in the prepared silicon capture agent, the content of the group-VIB metal calculated in terms of sulfide is within a range of 2-20%, preferably within a range of 5-15%; the content of group-VIII metal calculated in terms of sulfide is within a range of 1-10%, preferably within a range of 2-8%; the content of the aluminum oxide is within a range of 50-96%, preferably within a range of 62-88%, based on the total weight of the silicon capture agent.

14. The method according to any one of claims 11-13, wherein the group-VIB metal compound is a phosphate and/or an ammonium salt of a group-VIB metal;
and/or, the group-VIII metal compound is at least one selected from the group consisting of nitrates, carbonates, phosphates, sulfates, basic carbonates, and acetates of a group-VIII metal;
preferably, the calcination conditions in step (1) comprise a calcination temperature within a range of 300-600°C and a calcination time within a range of 3-6 hours.

15. The method according to any one of claims 11-14, wherein the sulfurization in step (1) is a dry process sulfurization or a wet process sulfurization;
preferably, the dry process sulfurizing agent used for the dry process sulfurization is hydrogen sulfide, and the wet process sulfurizing agent used for the wet process sulfurization is at least one selected from the group consisting of carbon disulfide, dimethyl disulfide, methyl sulfide, and n-butyl sulfide;
preferably, the sulfurization conditions in step (1) comprise a sulfurization pressure within a range of 3.2-6.4MPa, a sulfurization temperature within a range of 250-400°C, a sulfurization time within a range of 4-12h, and a flow rate of hydrogen gas within a range of 2-25 mL·min⁻¹·g⁻¹.

16. The method according to any one of claims 11-15, wherein the aluminum source is an acidic aluminum salt or an alkaline aluminum salt; preferably, the acidic aluminum salt is at least one selected from the group consisting of Al₂(SO₄)₃, AlCl₃, and Al(NO₃)₃; and/or, the alkaline aluminum salt is NaAlO₂;
preferably, the aluminum source is an acidic aluminum salt, and the precipitating agent is at least one selected from the group consisting of NaOH, NH₄OH, and NaAlO₂; and/or the aluminum source is an alkaline aluminum salt, and the precipitating agent is CO₂;
preferably, the precipitation reaction conditions comprise a pH of 7.5-11, a temperature of 50-95 °C, and a time of 30-120 minutes;
preferably, the aging conditions comprise a pH of 7.5-11, a temperature of 50-90 °C, and a time of 3-24 hours;
preferably, the precipitation reaction and aging process in step (2) are carried out under an inert atmosphere.

17. A silicon capture agent produced with the method according to any one of claims 11-16.

18. A use of the composite oxide according to any one of claims 1-3 or the silicon capture agent according to any one of claims 6-10 and 17 in the treatment of a silicon-containing oil product.

19. A method for treating a silicon-containing oil product, the method comprises the following steps: contacting the silicon-containing oil product with the composite oxide according to any one of claims 1-3 or the silicon capture agent according to any one of claims 6-10 and 17 under the hydrotreatment conditions;
preferably, the silicon-containing oil product has a silicon content within a range of 1-1,000 µg/g, and the silicon-containing compound in the silicon-containing oil product is preferably selected from siloxane and/or silane;
preferably, the silicon-containing oil product is at least one selected from the group consisting of straight-run naphtha, straight-run diesel, aviation kerosene, wax oil, coking dry gas, coking naphtha, and coking diesel.

20. The method according to claim 19, wherein the hydrotreatment conditions comprise a pressure within a range of 2-10MPa, a reaction temperature within a range of 220-400°C, a hydrogen/oil volume ratio within a range of 200-800: 1, and a volume space velocity within a range of 1-10 h⁻¹.
